# EUROPEAN PATENT SPECIFICATION

(11) **EP 0 251 620 B1**
(45) Date of publication and mention of the grant of the patent: **20.01.1993**
(21) Application number: 87305513.1
(22) Date of filing: 22.06.1987
(51) Int. Cl.: B01D 63/10

(54) **Spiral wound membrane filtration device and filtration method using such device**
Trennvorrichtung mit spiralförmig gewickelter Membran und Verfahren zu ihrer Anwendung
Dispositif de séparation avec une membrane spiralée et méthode d'utilisation

(30) Priority: 24.06.1986 US 877906
(43) Date of publication of application: 07.01.1988
(73) Proprietor: HYDRANAUTICS, Goleta California 93117 (US)
(72) Inventor: Holland, Eric Christian, Goleta California 93117 (US); Lesan, Frederick Karr, Oxnard California 93033 (US); Knappe, Peter Herbert, Ventura California 93001 (US)
(74) Representative: Woodcraft, David Charles

(56) References cited:
- FR-A- 2 211 274
- US-A- 3 695 446
- US-A- 3 872 014
- US-A- 3 933 646
- US-A- 4 235 723

## Description

This invention is concerned with membrane separation devices of the spiral wound type useful for ultrafiltration, microfiltration, reverse osmosis, and gas mixture filtration applications, and capable of obtaining high conversions while maintaining turbulent or chopped laminar hydrodynamic flow conditions, and methods using such devices. More specifically, the invention relates to a spiral wound membrane element device having a radial feed path (hereinafter often referred to as "RFP") and thereby providing a potential for much higher conversion rates in a single element than heretofore possible.

Spiral membrane elements for ultrafiltration, microfiltration and reverse osmosis have long been regarded as efficient devices for separating components of fluid mixtures. In a typical process, a pressurized fluid mixture is brought into contact with a membrane surface whereby one or more components of that fluid mixture pass through the membrane because of a difference in chemical potential and, due to varying mass transport rates through the membrane, a separation is achieved.

The most common spiral membrane element known heretofore is designed to have the fluid feed mixture enter at one end of the cylindrical membrane element and travel across the spiral windings between parallel membrane surfaces, i.e. along the longitudinal axis of the element (axial feed path-referred to herein as "AFP"). Separation occurs at the membrane-fluid interface resulting in (1) a more concentration feed stream and (2) a permeate, which is the fluid passing through the membrane barrier layer. The permeate stream travels in a spiralling radial direction within the separate sealed channel defined by the permeate sides of two membranes until it reaches the porous central core tube where it is collected and expelled out of one or both ends of the core tube (see, for example, U.S-A-4,235,723, 3,367,504, 3,504,796, 3,493,496 and 3,417,870).

Spiral wound membranes invariably contain a flow path or channel for the feed enclosed by membrane sheets with active membrane barrier layers facing said flow path. In the case of anisotropic membranes containing a single barrier layer on only one side of the sheet, it is conventional for the membrane sheets to have the barrier layers facing each other and separated by a spacer which promotes turbulence in the feed flow path. The membranes are edge-sealed, for example with adhesives or heat sealed, in such a manner as to furnish an inlet for feed and an outlet for concentrate (since "feed" becomes "concentrate" as it passes along the membrane, the stream within the membrane element may be optionally termed "feed-concentrate" herein).

The conversion (i.e. the ratio of permeate volume to feed volume) for the common prior art spiral elements is governed by the element's length (see, Desalination by Reverse Osmosis, Ulrich Merten, 1966, Chapter 5). Typically, unit conversions are far below commercial process requirements, requiring numerous elements in series to achieve acceptable conversions. For example, a typical reverse osmosis system operating at 75% conversion might require eighteen one meter long elements in a 2-1 array of pressure vessels (i.e. a first stage having six elements in series in each of two parallel trains and a second stage having six elements in series in a single train) producing a feed-concentrate flow path length of 12 meters. The requirement for arraying spiral elements in series depends on the fouling potential of the feed water, with the above example being most commonly employed on municipal, well, and surface-water feeds without extraordinary pretreatment.

For desalination systems requiring high conversions and permeate flows below 283,905 to 378,540 liters per day (75,000 to 100,000 gallons per day), small diameter elements [less than 20.3 cms (8 in)] must be used to maintain arrays with 12 meter feed-concentrate pathlengths. The drawbacks to this method of obtaining high conversion include (a) increased floor space requirements, (b) increased membrane module cost on a cents per liter basis, (c) increased process and pressure vessel costs, and (d) added complexity of expanding systems due to array requirements.

If it were possible to change the element flow path from the standard axial (AFP) to a radial direction (RFP), the flow path may be tailored to the desired conversion rate or even increased; thus such module's conversion would be governed by its diameter rather than length.

Unfortunately, it is not a simple matter to design a practical radial flow path element since the permeate collected within the permeate channel must not travel more than one to two meters before exiting the module, otherwise excess back pressure will be generated in the permeate carrier fabric reducing the element's efficiency. This constraint eliminates the possibility of successfully utilizing the principle of the flowpath design of U.S-A-3,933,646 containing one or more very long membrane envelopes in which the permeate travels the length of the membrane envelope before entering the core tube and exiting the module.

We have now surprisingly found a spiral wound membrane element device that is capable of operating at high conversions (i.e. greater than 30% and up to but not limited to 90%), while maintaining turbulent or chopped laminar flow conditions. This is accomplished by designing the feed-concentrate path to spiral radially (RFP), preferably outwardly from the central core tube, while collecting the permeate through one or both open lateral edges of the membrane element. this latter feature provides a maximum permeate flow path not greater than the element's axial length and independent of the feed-concentrate flow path length. A high pressure seal between individual membrane sheets and the permeate fluid can be accomplished by sealing the product water carrier fabric with an adhesive (or thermally) while recessing the membrane and spacer materials from the edge of the permeate carrier fabric.

Accordingly, the present invention provides, in a membrane filtration device of the cylindrical spiral wound type and suitable for filtering a fluid feed mixture under elevated pressure wherein one or more sheet membranes and feed spacer sheets and permeate channel spacer sheets (14) are tightly wound about a central porous core tube providing separate flow channels for a feed-concentrate mixture and a permeate fluid produced therefrom by means of seals to prevent intermixing of the feed-concentrate and permeate fluids, characterised in that, at least one pair of membrane sheets attached by one of their ends to, and wound to spiral outwardly about, the central porous core tube and sealed to define at least one spiral feed-concentrate flow channel extending between a channel opening at the central porous core tube and another opening at an unsealed terminal end of the spiralling membrane sheets, said feed-concentrate flow channel being connected to separate conduit means for delivering feed mixture to and discharging concentrate from the feed-concentrate channel, and a space on the permeate side of the membrane sheets sealed to define at least one permeate channel for permeate discharge from at least one unsealed axial end of said permeate channel, and said permeate channel being connected to conduit means for collection of said permeate.

The spiral wound element of the invention does not require serial staging in order to operate at commercially viable system conversions for ultrafiltration ("UF"), microfiltration ("MF"), or reverse osmosis ("RO") applications. Accordingly, small reverse osmosis systems ranging in the flow from 11,356 to 283,905 liters per day (3000 to 75,000 gallons per day) may be produced with large diameter elements [20.3 to 30.5 cm (8 to 12 in) or larger]. System design can be modular, i.e. elements may be added on a unit basis without the need for maintaining proper arrays. Smaller systems [less than 11,356 liters per day (3000 gallons per day)] may be produced by decreasing the element length and/or diameter.

The manufacture of spiral wound membrane elements for reverse osmosis, ultrafiltration and microfiltration applications is well known in the art. Flat sheet membranes, alternately containing, between the membrane sheets, open porous fabric or plastic sheets or webs, are attached to (normally with adhesive) and wound about a central porous "core" tube. The open porous sheets between membranes serve primarily to transport the fluid, create turbulence (in the case of a brine spacer, etc.) and prevent the collapse of the flow channel.

For convenience, the term "product" is used herein to identify the permeate, e.g. of a reverse osmosis desalination element. In some types of membrane separations the feed-concentrate stream is the true product and the permeate is a waste or recycled stream. Further, it is even possible that both the permeate and feed-concentrate streams are considered as product streams in the sense that both have uses after separation, e.g., ultrafiltration of electrocoat paint where both paint solids (concentrate) and permeate water are reused in the painting-rinsing operation.

Further, as used herein and in the appended claims, the terms "spacer" and "spacer sheet" without qualification are intended to include the common porous sheet materials known to the membrane filtration art, particularly the reverse osmosis field, as useful for providing a solid but porous conduit for permeate fluid or turbulence in a stream flowing within a confined channel or merely to space membrane sheets or prevent collapse of the channel between membranes under elevated pressures. Such "spacer sheets" as used heretofore are normally of fabric or plastic composition but any durable flat sheet material capable of performing the above-stated functions upon assembly into spiral wound membrane elements should be deemed within the scope of the terms "spacer" and "spacer sheet".

In most instances, there is a feed (e.g. brine in the case of RO) spacer on the feed-condensate side of the membrane leaf (i.e. the side with the active barrier membrane surface or "skin") and a knitted fabric sheet spacer for permeate transport on the opposite, i.e. permeate side. Using industrial adhesives and cements well known to this art, or other sealing means such as heat sealing, the various sheets or leaves of membranes and spacers are "glued" to form the flow paths, normally immediately before winding the membrane into a rigid cylinder. After optional end-cups, and other housing parts are "glued" onto this cylinder and all of the seals are cured, the spiral membrane element may be inserted into, or connected to, apparatus for filtration purposes. In reverse osmosis applications, the element with end cups attached is usually inserted in a pressure vessel tube for high pressure filtration (e.g. 4 to 100 atmospheres).

Depending upon the desired flow configuration, it is conventional in the art to have a number of repeating membrane envelopes (5 to 15) and spacers wound about a single porous core tube. Unlike the spirals of the prior art, in the RFP element of the invention, which can provide a very long flow path for the feed, it is desirable that fewer, even a single or double membrane envelope, will prove most useful for the application intended. Unlike the conventional spiral wound membrane elements which must be staged in a series to achieve high conversion, the RFP element of the invention can be designed to achieve the desired conversion within a single element with overall capacity increased by parallel flow through additional elements.

The present invention will now be further described with reference to the accompanying drawings, in which reverse osmosis elements (RO) are illustrated since RO design requirements are perhaps the most critical because of the high hydraulic pressures needed for filtration.

In the accompanying drawings:-
Figure 1 is a cut-away view illustrating a spiral wound RFP membrane element of the invention within an external cylindrical pressure housing;
Figure 2 is a perspective view of a typical layer arrangement to be wound about a porous tube to produce a spiral wound RFP element of the invention;
Figure 3 is an enlarged section of a feed-side view of the RFP element of Figure 1 taken along line 3-3;
Figure 4 is an enlarged cross-section view of a recessed portion of the permeate side of the RFP element of Figure 1 taken along line 4-4;
Figure 4a is an enlarged view of the portion 4a of Figure 4 to show the positional relationship between the constituents;
Figure 5 is an enlarged cross-section view of a non-recessed portion of the permeate side of the RFP element of Figure 1 taken along line 5-5;
Figure 5a is an enlarged view of the portion 5a of Figure 5 to show the positional relationship between the constituents;
Figures 6 and 7 diagramatically illustrate the prior art elements and the RFP membrane elements of the present invention, respectively, and are included for the purpose of explaining the different membrane flow paths; and
Figures 6a and 7a are sectional views taken in the direction of arrow 6a in Figure 6 and arrow 7a in Figure 7, respectively.

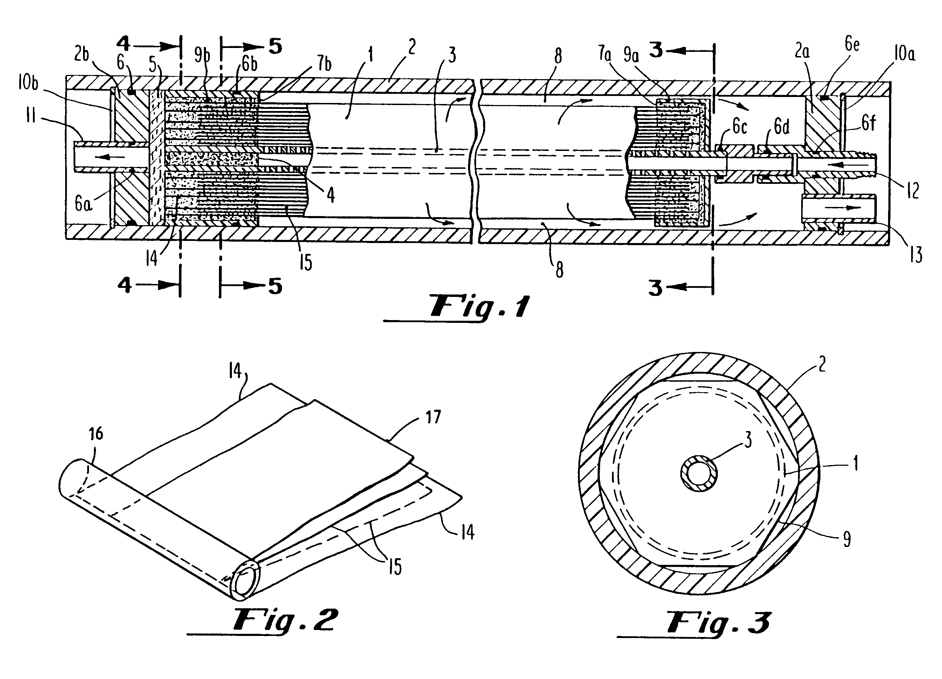

Figure 1 shows a cut-away view of a typical reverse osmosis spiral wound membrane element 1 of this invention within a cylindircal RO pressure vessel 2. The membrane element 1 is sealed within the pressure vessel 2 with end plates 2a and 2b containing ports for the various feed, concentrate and permeate nozzles and retained in position by ring clamps 10a and 10b, respectively. "O" ring seals 6, 6a, 6b, 6c, 6d, 6e and 6f are shown as solid dark rectangles at the principal points where the membrane element or its various nozzles are connected to ports of the membrane element 1, the pressure vessel 2, or end plates 2a and 2b. At the center of the RFP membrane element 1 is a porous core tube 3 around which membrane sheets 15 and spacers are spirally wound. At one end of the membrane element 1 hereinafter referred to as the product end the element abuts a rigid porous plate 5 which serves to transport the permeate fluid (product) from the permeate channel spacer sheets (14), consisting, for example, of a porous fabric, hereinafter also referred to as product carrier fabric (14), through an outlet nozzle 11. The spacers used in the feed-concentrate channel are not shown in Figure 1.

The porous core tube 3 contains a tube plug 4 (an adhesive plug) at the product end of membrane element 1 to prevent mixing of feed and permeate at the product end in the porous plate 5 which, as previously indicated, serves as a conduit for the product leaving the pressure vessel 2 through a permeate nozzle 11. Both lateral edges of the membrane element 1 are potted in a low viscosity adhesive 7a and 7b which seals the membrane and spacer ends and bonds the membranes and spacers to optional end cups 9a and 9b. In place of end cups 9a and 9b the membrane element 1 can be optionally sealed in a glue "cup" of the same dimensions.

The product-side end cup 9b shown in Figure 1 is cylindrical in shape and contains an "O" ring seal 6b to prevent leakage of concentrate into the porous plate 5. To ensure sufficient encapsulation of the membrane element 1 it is preferable that the product end cup 9b length be about 15.2 cms (6 ins.), and about 7.6 cms (3 in.) in the case of the feed-side end cup 9a. The two ends of the membrane element 1 are potted in the end cups 9a and 9b individually, usually starting with the product end followed, often on the following day, by the feed end. During the encapsulation process the element may be placed in a pressure chamber and blanketed with nitrogen, e.g. at 344.8 kPa gauge (50 psig), to ensure a bubble- and void-free seal.

The concentrated feed stream flows out of the membrane element 1 from an unsealed end (not illustrated in Figure 1) of the spiralling radial membrane flow path into an open circumferential chamber 8, defined by the space between the cylindrical element 1 and the cylindrical pressure vessel 2. Openings contained in feed end cup 9a allow the concentrate to pass out of the circumferential chamber 8 into an open space about a feed nozzle 12 and thence exit from the pressure vessel 2 through a concentrate nozzle 13.

Although for purposes of illustration only the accompanying drawings show a membrane design having a permeate exit on only one side of the RFP element 1, a permeate exit may be contained on both ends with only minor changes in design. To achieve dual permeate ports the sealing technique used for the permeate side in Figure 1 may be repeated on the opposite side together with a second permeate nozzle 11. Relocation of the concentrate nozzle 13 to another location along the pressure vessel 2 would be a simple matter of design convenience.

Figure 2 is a diagramatic illustration of a typical layer arrangement of an RFP spiral wound membrane of the invention containing product carrier fabric 14, two membrane sheets 15, a porous core tube 16, and a feed spacer 17. The product carrier fabric 14 is typically a knit fabric capable of transporting the product fluid (usually water) along the defined permeate flow path. As illustrated, the membrane sheets 15 and the feed spacer material 17 are recessed in width with respect to the width of the product carrier fabric 14. In order to produce effective seals, on the product side the preferred recess is about 10.2 cms (4 in.), but at least about 2.5 cms (1 in.), and on the feed side the preferred recess is about 2.5 cms (1 in.), but at least about 1.3 cms (0.5 in.).

Referring to Figure 3, it can be seen that the feed-side end cup 9 is of a molded hexagonal configuration with a central opening to accommodate the core tube 3.

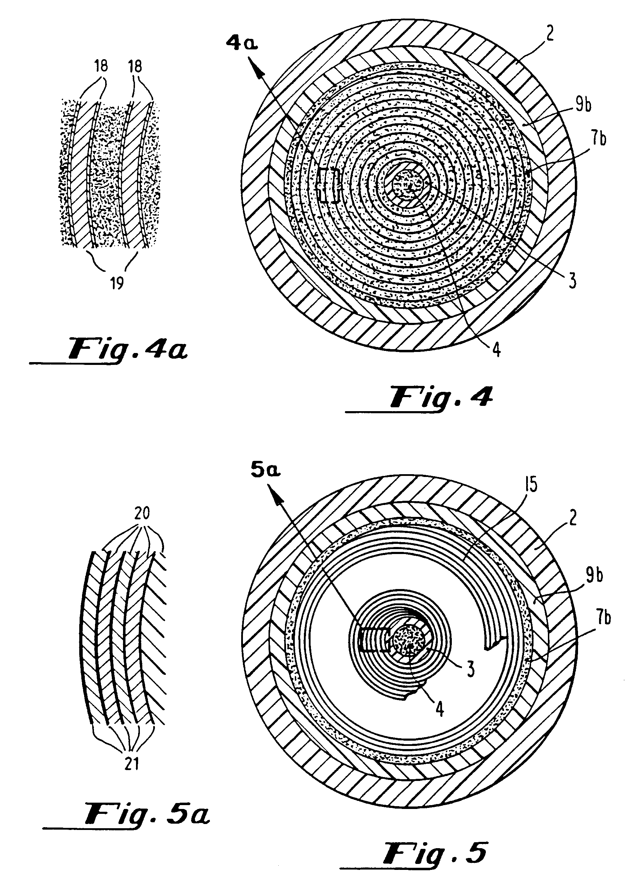

Figures 4 and 4a are, respectively, an enlarged cross-section of the element of Figure 1, and a further enlarged view of the potted permeate fabric of the element. In Figure 4 the outer ring is the pressure vessel 2 into which is fitted the product-side end cup 9b. The adhesive 7b hydraulically seals the end cup 9b to the spiralling potted carrier fabric 14 (represented by the solid spiralling line) the only sheet of the membrane layer arrangement illustrated in Figure 2 which extends to the product end of the element 1. In the further expanded view of Figure 4a, permeate channel spacer sheet (14) with a thin impervious film 18 on either side thereof is shown potted in adhesive 7b. The permeate channel spacer sheet 14 spirals outwardly from the porous core tube 3, with a central adhesive tube plug 4, to the adhesive layer connecting it to the end cup 9b.

Figures 5 and 5a are views of the non-recessed portion of the membrane element 1 of Figure 1 along line 5-5. In Figure 5 the solid spiralling lines represent the membrane sheets 15 and the spaces between represent the feed concentrate and permeate flow channels with spacers and adhesive 7a omitted. In Figure 5a the hatched lines represent spacers 17 between membrane leaves 15 (again the adhesive 7a is omitted).

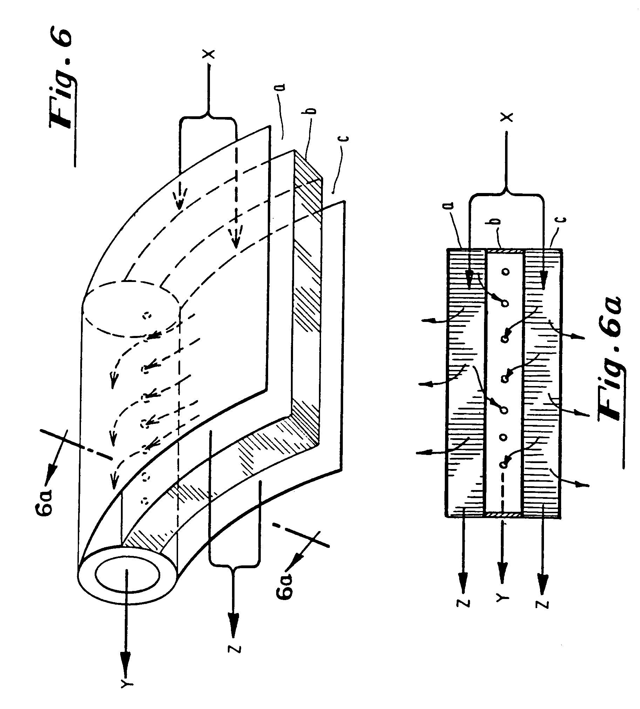

Figure 6 is a diagrammatic representation of a conventional spiral element of the prior art (AFP element) in an exaggerated "unwound" state intended to illustrate the flow direction of the feed-concentrate and permeate in such elements. Figure 6a is a view of the spiral element of Figure 6 along the line 6a-6a. Channels a and c are feed-concentrate channels with b the permeate channel. The barrier layer ("skin") sides of the membrane pairs face each other in channels a and c, with spacers not shown, and channel b for permeate is defined by the opposite (permeate) sides of the membrane pairs. The feed stream (represented by "X" in Figures 6 and 6a) flows axially into one end of the open membrane channels a and c wherein a portion of the feed permeates through the membrane skin into the adjacent permeate channel b and the remaining feed (represented by "Z" in Figures 6 and 6a and now concentrate) exits through the opposite axial end of the membrane channels. The permeate (represented by "Y" in Figures 6 and 6a) flows inward to the core tube at right angles to the feed, and spirals down to ultimately leave the spiral winding through the porous core tube and out of the element. To direct the flow path as described, the membrane and spacer leaves are sealed at the indicated places represented by shaded areas in Figures 6 and 6a. Thus, it may be seen that the permeate channel b is sealed on all sides except at the openings in the porous core tube. Seals at the core tube between permeate and feed-concentrate channels illustrated in Figure 6a are essential to prevent mixing at that location.

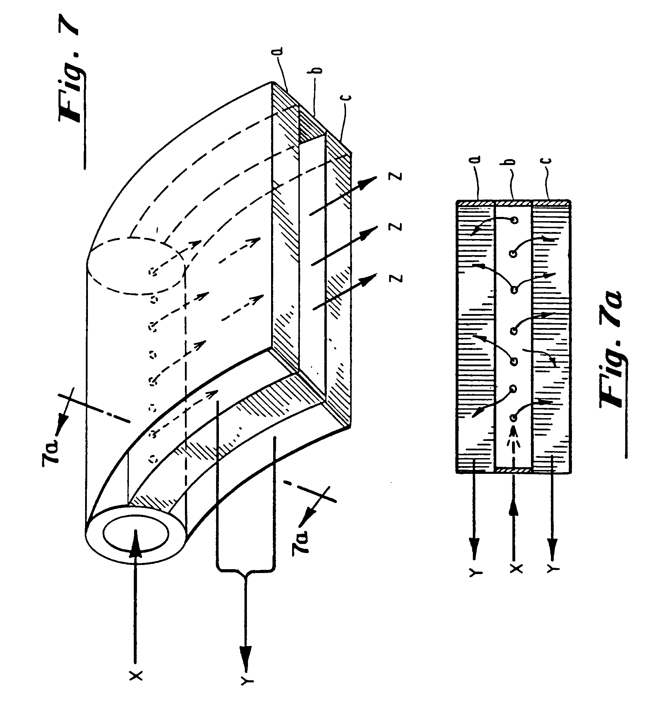

Figures 7 and 7a represent a preferred embodiment of the RFP element of the invention. Figure 7a is a view of the spiral element of Figure 7 along the line 7a - 7a. These figures do not accurately show the geometry of the RFP element but are intentionally distorted from scale to more clearly illustrate the flow patterns of the various fluid fractions within the membrane channels. The feed (represented by "X" in Figures 7 and 7a) enters a porous core tube where it is distributed at right angles (see arrows) into the outwardly spiralling membrane channel b. The concentrate (represented by "Z" in Figures 7 and 7a) leaves the membrane channel b at the outer edge of the spiral winding after passing the full length of the membrane channel. As illustrated, the feed-concentrate channel b is sealed at both lateral edges (see Figure 7a), whereas the permeate channel on the permeate sides of the membranes (illustrated as channels a and c) are sealed at one lateral edge (see Figure 7a), longitudinally at the porous core tube, and at the terminal edge of the spiralling membrane sheets (see Figures 7 and 7a). Illustrated in Figure 7a are seals for each membrane at the core tube to prevent lateral mixing of permeate and feed-concentrate.

Because the length of the membrane in the RFP spiral element is not constrained by any operating limitations, such as backpressure from the permeate side, the flow path can be shortened or lengthened to "tailor" the flow path to the desired degree of conversion or concentration of the feed. In this regard the area of the flow path and, to a certain extent, the type of fluid flow, i.e. whether laminar or turbulent, determines the transmembrane passage of the permeate. Prohibitive backpressure is avoided by allowing the permeate to leave the spiral at right angles to the feed-concentrate flow at one or both axial ends of the cylindrical element.

Permeation of a portion of the feed through the membrane along the feed-concentrate flow path causes a gradual reduction of the feed volume, thereby diminishing feed velocity in a fixed-dimension channel and reducing the downstream permeation efficiency. This phenomenon is exacerbated by the present invention which provides the possibility of a much longer feed flow path (RFP). Design modifications of the RFP element can reduce or virtually eliminate such feed velocity changes. Some of the more obvious design changes include (1) using a tapered spacer to progressively reduce the distance between membranes thereby constricting the downstream flow path and increasing fluid velocity or (2) taper the width of the flow path by sealing the edges closer to the middle along the spiral path. A preferred embodiment of the invention utilizes the ability of the RFP of the invention to internally "stage" a single element. Accordingly, two, three or more membrane envelopes of different lengths (measured radially from the core) can be wound about a single core tube yielding multiple stages as the feed volume decreases along its spiral path (see, e.g. Examples III and IV, infra).

The radially spiralling feed flow path used in the invention offers a much longer potential net flow path length than the traditional axial flow direction for the industry's standard spiral modules. This affords correspondingly greater flow conversions without reduction in permeate volume or quality. However, the novel flow path design used in the present invention requires a high pressure seal between the feed and permeate streams located outside of the membrane envelope; a requirement which is not necessary in the standard spiral module flow geometry. Such a pressure seal is producable using an adhesive and a compatible bonding surface. Not only must the bonding surface be compatible with the sealing adhesive, it must also act as a shield for the product water carrier to ensure an unobstructed pathway for the exiting permeate.

In a preferred embodiment, it is most desirable to coat or laminate a hydraulically impervious film onto a product (permeate) carrier fabric at the product end thereof to achieve suitable bonding to seal the product end of the element. This coating or film, preferably a polymer film or metal foil must be carefully applied to avoid substantial penetration into the knit permeate fabric which could reduce transport of product through the fabric particularly in a reverse osmosis operation. We have found that this may be accomplished by applying a uniform non-porous polyurethane coating to the surface of the fabric which is to be located at the product end. The polymer coating is of such composition and thickness that it will adhere uniformly to the surface of the fabric even when the fabric is rolled into a tight cylinder in a spiral membrane element. The length of the coating or film should be sufficient to form parallel planar fluid seals about the knitted fabric, usually about 7.6 to 30.5 cms (3 to 12 in.) and preferably 5.2 to 25.4 cms (6 to 10 in.) long. To obtain an effective seal at a product (permeate) end of the RFP spiral element of the invention it is normally necessary to recess the membrane and feed spacer materials, allowing only the permeate fabric to extend to the end of the element. Thus only the knit fabric, which serves as the permeate conduit, is visible from the product end of the RFP element.

The principle of this invention is particularly useful in any spiral wound membrane device employing flat sheet membrane for reverse osmosis, ultrafiltration, membrane softening, microfiltration, and gas separation, and requiring recoveries greater than 20/30%, the limit of currently available RO spiral wound elements based on present engineering practice. This invention allows a single element, which can range in length from about 30.5 cm to 1.52 m (12 to 60 in.), to operate under turbulent or chopped laminar flow conditions at recoveries up to 90% while maintaining boundary layer conditions similar to current brine staged spiral system designs using 12 to 18 elements in series. Said another way, the degree of conversion/recovery of the feed stream, using the device of the invention, is independent of the length of a module, but rather depends upon the length of the radial flow path which affects only the diameter of the module.

Membranes for UF, RO, MF and gas filtration are well known in the prior art. Both anisotropic (asymmetric) membranes having a single or double barrier layer (skin) and isotropic membranes are presently made in flat sheet form for UF, RO, MF and gas filtration (see e.g. U.S-A-3,615,024; 3,597,393; and 3,567,632). The membranes may be of a single polymer or of a copolymer, laminated or of a composite structure wherein a thin barrier coating or film, charged or uncharged, is formed over a thicker substrate film, the latter being either porous or non-porous (diffusional). The polymers suitable for such membranes range from the highly stable hydrophobic materials, such as polyvinylidene fluoride, polysulfones, modacrylic copolymers and polychloroethers, normally used for UF, MF and gas filtration applications and as substrates for RO composites, to the hydrophilic polymers such as cellulose acetate and various polyamines (see, e.g. U.S-A-4,399,035; 4,277,344; 3,951,815; 4,039,440; and 3,615,024).

In a low pressure applications (e.g. 2 to 10 atmospheres), such as ultrafiltration and microfiltration, the spiral wound element may be optionally mounted permanently in its own pressure container or cartridge having suitable fittings for connection to the filtration systems.

The present invention will now be further illustrated by way of the following Examples.

### Example I

A 15.2 cms (6 in.) diameter element was prepared by rolling a single feed channel (2 membranes) element comprising a 7.112 m by 1.016 m (280 in. by 40 in.) sheet of knitted fabric covered with a plastic coating 0.076 mm (3 mils) thick at a height of 20.3 cms (8 in.) on the permeate side. The edge of the coating-fabric laminate was sealed with a low viscosity adhesive to prevent the potting adhesive from sealing the permeate water conduit. The length of the coating was trimmed so that it covered the fabric for a length of 5.842 m (230 in.). This was necessary to allow sealing the ends of the element with adhesive during the rolling operation. Two leaves of a composite membrane having a polysulfone substrate in a flat sheet configuration, 6.096 m by 83.8 cms (240 in. by 33 in.), were cut and placed on the element to leave a recess on the feed and permeate sides from the edge of the fabric material of 2.5 and 10.2 cms (1 and 4 in.), respectively. A 1.016 m (40 in.) porous core tube was mounted on a rolling machine, aligned and then attached to the coated fabric with double sided tape. A 7.112 m by 83.8 cms (280 in. by 33 in.) polypropylene brine spacer sheet material was placed between the two sheets of membrane so that the edges were aligned with the two membrane sheets. A membrane adhesive was uniformly spread around the entire periphery of the two membrane sheets to form a sealed envelope. The four sheets were then rolled around the core tube to form a spiral element. The following day the permeate/coated fabric end of the element was potted in a plastic end cup with a low viscosity adhesive for a length of 15.2 cms (6 in.). The potted end was allowed to cure under an 551.6 kPa (80 psi) nitrogen blanket to ensure a bubble and void free potting. The following day the feed/uncoated side of the element was potted so that the feed core tube was left exposed 2.5 to 3.8 cms (1 to 1.5 in.) and free from adhesive. The feed side was also potted under a nitrogen blanket. 2.5 cms (1 in.) of the permeate side of the element was trimmed with a saw to open the permeate channel (i.e. expose the knit fabric). The element was placed in a pressure vessel with the permeate side supported by a porous support plate and thereafter tested under the following conditions: 1.862 M Pa (270 psi) feed pressure, 48% recovery, 3100 ppm NaCl feed solution at 25°C. The element produced [1,870 liters per day (494 gallons per day)] at 99.0% rejection with a differential pressure drop of 34.5 kPa (5 psi) between the feed inlet and the permeate.

### Example II

A 6.4 cms (2.5 in.) diameter element was prepared using a 43.2 cms (17 in.) core tube with a 38.1 cms (15 in.) wide by 50.8 cms (20 in.) long piece of coated permeate fabric. The coating material was 15.2 cms (6 in.) high and 20.3 cms (8 in.) long on the top and bottom of the fabric on the permeate edge. Two sheets of a cellulosic membrane with a non-woven substrate 30.5 cms (12 in.) wide by 20.3 cms (8 in.) long were placed on either side of the fabric material to give a 5.1 cms (2 in.) recess from the permeate edge and a 1.3 cms (½ in.) recess on the feed edge. An industrial membrane adhesive was used to bond the membrane to the fabric material on all four sides. A piece of brine spacer netting 30.5 cms (12 in.) wide by 50.8 cms (20 in.) long was placed on top of the membrane to give the same recess dimensions as the membrane sheets. The four sheets of material were then rolled onto the core tube to form a spiral element. The following day the permeate side of the element was potted in a low viscosity adhesive under a nitrogen pressure of 206.9 kPa (30 psi). The next day the feed side was potted using a low viscosity adhesive in such a way as to allow the core tube to be exposed 1.3 to 2.5 cms (0.5 to 1 in.) and free of adhesive. The permeate potting was then trimmed 2.5 cms (1 in.) to open the coated permeate channel fabric. The element was tested at 2.965 MPa (430 psi), 3000 total dissolved solids (TDS) NaCl feed, 1% recovery, and 25°C giving a flux of 558.23 litres per square meter per day [13.7 gallons per square foot per day (GFD)] at 92.6% rejection.

### Example III

A 21.6 cms (8.5 in.) diameter by 94 cms (37 in.) long element prepared by a procedure similar to Example I has two leaves, one 12 meters in length and one 6 meters in length. The two leaves are rolled into a spiral element and then potted. This results in a configuration with feed brine path lengths and boundary layers similar to conventional brine staged 2-1 arrays of six element pressure vessels. This element can operate at 75% recovery producing 27,633.4 liters per day (7300 gallons per day) at 97.5% rejection, 1.862 MPa (270 psi) feed, 25°C, 2000 TDS NaCl feed.

### Example IV

A 30.5 cms (12 in.) diameter by 1.524 m (60 in.) long element containing an 18, 12 and 6 meter leaf is constructed by a procedure similar to Example I. The three leaves are rolled into a spiral element and then potted. This results in a configuration with feed brine path lengths similar to conventional brine staged 3-2-1 arrays of six element pressure vessels. This element can operate at 90% recovery producing 87,064.2 liters per day (23,000 gallons per day) at 98.0% rejection operating at 2.896 MPa (420 psi) feed pressure, 25°C and 2000 ppm NaCl feed.

### Example V

Following the procedure set forth in Example II an RFP membrane element comprising two membrane leaves of different lengths was assembled. The membrane sheet consisted of a polyamide interfacial composite on a polysulfone substrate. The element was tested under the following conditions: 1.862 MPa (270 psi) feed pressure, 2100 ppm NaCl feed solution at 25°C, 4% recovery. The element produced a flux of 366.72 litres per square metre per day (9 GFD) at 96.4% rejection of the NaCl.

## Claims

1. A membrane filtration device of the cylindrical spiral wound type and suitable for filtering a fluid feed mixture under elevated pressure wherein one or more sheet membranes (15), feed spacer sheets (17) and permeate channel spacer sheets (14), are tightly wound about a central porous core tube (3) providing separate flow channels for a feed-concentrate mixture and a permeate fluid produced therefrom by means of seals to prevent intermixing of the feed-concentrate and permeate fluids, characterised in that at least one pair of membrane sheets (15) is attached by one of their ends to, and wound to spiral outwardly about, the central porous core tube (3) and sealed to define at least one spiral feed-concentrate flow channel extending between a channel opening at the central porous core tube and another opening at an unsealed terminal end of the spiralling membrane sheets, said feed-concentrate flow channel being connected to separate conduit means for delivering the feed mixture to (12) and discharging concentrate from (13) the feed-concentrate channel, and a space on the permeate side of the membrane sheets sealed to define at least one permeate channel for permeate discharge from at least one unsealed axial end of said permeate channel, and said permeate channel being connected to conduit means (11) for collection of said permeate.

2. A membrane filtration device as claimed in claim 1, wherein each of said permeate channel spacer sheets consists of a porous knitted fabric sheet.

3. A membrane filtration device as claimed in claim 1 or claim 2, wherein said sheet membranes are recessed relative to the permeate channel spacer sheets from the axial end.

4. A membrane filtration device as claimed in claim 3, wherein a hydraulically impervious film (18) is coated or laminated to at least one edge of the permeate channel spacer sheets, in the recessed portion thereof.

5. A membrane filtration device as claimed in claim 1, wherein said membrane sheets are sealed on all edges of the permeate side except for at least one lateral edge, to define a permeate channel for discharge of permeate from the element and said permeate channel being connected to conduit means (11) for collection of said permeate.

6. A membrane filtration device as claimed in any preceding claim, wherein at least one lateral edge of the cylindrical membrane device is potted in a low viscosity adhesive (7a and/or 7b) for a distance of at least 2.54 cm (1 in.) from the axial end.

7. A membrane filtration device as claimed in claim 6, wherein at least one lateral edge of the device is potted with an adhesive in a plastic end cup (9a and/or 9b).

8. A membrane filtration device as claimed in any preceding claim, wherein the or each sheet membranes and all spacers, except the permeate channel spacer, for example a permeate carrier fabric, are recessed at least about 2.54 cm (1 in.) from the end of the device at the or each unsealed permeate end.

9. A membrane filtration device as claimed in any preceding claim, wherein the or each of the spiral feed-concentrate and axial permeate flow channels are sealed with adhesive.

10. A membrane filtration device as claimed in any preceding claim, wherein the membrane is a reverse osmosis membrane, an ultrafiltration membrane, or a microfiltration membrane.

11. A membrane filtration device according to any preceding claim wherein for each feed spacer sheet (17) there is one permeate channel spacer sheet (14) and two membrane sheets (15), arranged such that within the body of the wound spiral each permeate channel spacer sheet has a membrane sheet on both faces thereof.

12. A method for (i) filtering a fluid mixture containing dissolved salts, (ii) desalinating a brackish or sea water mixture, (iii) separating water and any dissolved salts contained therein from larger dissolved or suspended molecules in a fluid mixture or (iv) separating large dissolved molecules or particulate materials from a fluid mixture containing the same, which comprises filtering said fluid mixture through a membrane filtration device as claimed in any of claims 1 to 11 wherein the sheet membranes consist of reverse osmosis membranes in the case of (i) and (ii), ultrafiltration membranes in the case of (iii), and microfiltration membranes in the case of (iv).

## Patentansprüche

1. Membran-Filtervorrichtung der zylindrisch gewickelten Bauart zum Filtern einer zugeführten Flüssigkeits-Mischung unter erhöhtem Druck, mit ein oder mehreren blattförmigen Membranen (15), Zuführ-Abstandshalterblättern (17) und Permeatkanal-Abstandsblättern (14), die eng um ein zentrales, poröses Kernrohr (3) herumgewickelt sind, wodurch sich mit Hilfe von Abdichtungen zur Verhinderung einer Vermischung des zugeführten Konzentrats und der Permeatflüssigkeit getrennte Fließkanäle für eine zugeführte Konzentratmischung und ein daraus hergestelltes Permeat ergeben, dadurch **gekennzeichnet,** daß wenigstens ein Paar von Membranblättern (15) mit ihren Enden am mittleren, porösen Kernrohr (3) befestigt und von dort spiralig nach außen aufgewickelt und abgedichtet sind, um wenigstens einen spiralig geformten Konzentratzuführflußkanal zu bilden, der sich zwischen einer Kanalöffnung am zentralen, porösen Kernrohr und einer weiteren Öffnung an einem unabgedichteten Ende der spiraligen Membranblätter erstreckt, wobei der Zuführ-Fließkanal für das Konzentrat mit einer getrennten Leitung zu (12) und zum Abführen des Konzentrats vom (13) Zuführfließkanal verbunden ist und wobei auf der Permeatseite der Membranblätter ein Raum abgedichtet ist, um wenigstens einen Permeatkanal zum Auslaß des Permeats von wenigstens einem axialen Ende des Permeatkanals zu bilden und wobei schließlich der Permeatkanal mit einer Leitung (11) zur Sammlung des Permeats verbunden ist.

2. Membran-Filtervorrichtung nach Anspruch 1, dadurch gekennzeichnet, daß jedes der Permeatkanal-Abstandshalterblätter aus einem porösen, geknüpften Gewebestück besteht.

3. Membran-Filtervorrichtung nach einem der Ansprüche 1 oder 2, dadurch gekennzeichnet, daß die blattförmigen Membranen relativ zu den Permeatkanal-Abstandsblättern von dem axialen Ende her ausgeschnitten sind.

4. Membran-Filtervorrichtung nach Anspruch 3, dadurch gekennzeichnet, daß ein hydraulisch undurchlässiger Film (18) an wenigstens einer Kante der Permeatkanal-Abstandsblätter in deren ausgeschnittenem Abschnitt auflaminiert oder aufbeschichtet ist.

5. Membran-Filtervorrichtung nach Anspruch 1, dadurch gekennzeichnet, daß die Membranblätter an allen Kanten der Permeatseite mit Ausnahme von wenigstens einer Seitenkante abgedichtet sind, um einen Permeatkanal zur Abfuhr des Permeats aus dem Element zu bilden, wobei der Permeatkanal mit einer Leitung (11) zum Sammeln des Permeats verbunden ist.

6. Membran-Filtervorrichtung nach einem der vorangegangenen Ansprüche, dadurch gekennzeichnet, daß wenigstens eine Seitenkante der zylindrischen Membranvorrichtung auf einem Abstand von wenigstens 2,54 cm von ihrem Axialende aus mit einem niedrig viskosen Klebstoff (7a) und/oder (7b) ausgegossen ist.

7. Membran-Filtervorrichtung nach Anspruch 6, dadurch gekennzeichnet, daß wenigstens eine Seitenkante der Vorrichtung mit einem Klebstoff in einer Kunststoff-Endkappe (9a) und/oder (9b) ausgegossen ist.

8. Membran-Filtervorrichtung nach einem der vorangegangenen Ansprüche, dadurch gekennzeichnet, daß die Blattmembran oder jede Blattmembran und alle Abstandshalter, mit Ausnahme der Abstandshalter im Permeatkanal, beispielsweise ein Permeatkanal-Gewebe vom Ende der Vorrichtung her um wenigstens 2,54 cm an dem oder an jedem unabgedichteten Permeatende ausgeschnitten sind.

9. Membran-Filtervorrichtung nach einem der vorangegangenen Ansprüche, dadurch gekennzeichnet, daß der oder jeder spiralförmige Konzentratzuführ- und axiale Permeat-Fließkanal mit einem Klebstoff abgedichtet ist.

10. Membran-Filtervorrichtung nach einem der vorangegangenen Ansprüche, dadurch gekennzeichnet, daß die Membran eine Umkehr-Osmose-Membran, eine Ulfrafiltrations-Membran oder eine Mikrofiltrations-Membran ist.

11. Membran-Filtervorrichtung nach einem der vorangegangenen Ansprüche, dadurch gekennzeichnet, daß für jedes Zuführ-Abstandshalteblatt (17) ein Permeatkanal-Abstandsblatt (14) und zwei Membranblätter (15) vorhanden sind, die so angeordnet sind, daß innerhalb des Körpers der aufgewickelten Spirale jedes Permeatkanal-Abstandsblatt ein Membranblatt auf beiden Seiten hat.

12. Verfahren zum (I) Filtern einer Flüssigkeitsmischung, die gelöste Salze enthält, (II) Entsalzen einer Brack- oder Seewassermischung, (III) Trennen von Wasser und allen darin enthaltenen, gelösten Salzen von größeren, gelösten oder schwebenden Molekülen in einer Flüssigkeitsmischung oder (IV) Trennen von größeren, gelösten Molekülen oder Materialteilchen von einer Flüssigkeitsmischung, die diese enthält, durch Filtern der Flüssigkeitsmischung mit Hilfe einer Membran-Filtervorrichtung nach einem der Ansprüche 1 bis 12, dadurch **gekennzeichnet,** daß die Membranblätter im Falle von (I) und (II) aus Umkehr-Osmose-Membranen bestehen, im Fall von (III) aus Ultrafiltrtionsmembranen und im Fall von (IV) aus Mikrofilitrations-Membranen.

## Revendications

1. Dispositif de séparation à membrane du type cylindrique enroulé en spirale et approprié au filtrage d'un mélange fluide d'alimentation sous pression élevée dans lequel une ou plusieurs membranes lamellaires (15), feuilles d'espacement d'alimentation (17) et feuilles d'espacement de canaux de perméat (14), sont étroitement enroulées autour d'un noyau tubulaire central poreux (3) formant des canaux d'écoulement séparés pour un mélange d'alimentation concentrée et un perméat fluide émanant de celui-ci à l'aide de moyens de scellement pour empêcher de mélanger le fluide d'alimentation concentrée et le perméat fluide, caractérisé en ce qu'au moins une paire de membranes lamellaires (15) est fixée par une de leurs extrémités à et enroulé en spirale extérieurement autour du noyau tubulaire central poreux (3), et scellés pour définir au moins un canal d'écoulement d'alimentation concentrée spirale s'étendant entre une ouverture de canal située sur le noyau tubulaire central poreux et une autre ouverture située à l'extrémité terminale non scellée des membranes lamellaires spiralées, ledit canal d'écoulement d'alimentation concentrée étant connecté à des moyens séparés de conduite pour délivrer (12) le mélange d'alimentation et décharger (13) le concentrat du canal d'alimentation concentrée, et un espace, situé sur le côté perméat de la membrane lamellaire, scellée afin de définir au moins un canal de perméat pour décharger le perméat par au moins une extrémité axiale non-scellée dudit canal de perméat, et ledit canal de perméat étant connecté à un moyen de conduite (11) pour recueillir ledit perméat.

2. Dispositif de séparation à membrane selon la revendication 1, dans lequel chacune desdites feuilles espaceuses de canal de perméat est composée de feuilles poreuses de tissu à maille.

3. Dispositif de séparation à membrane selon la revendication 1 ou la revendication 2, dans lequel lesdites membranes lamellaires sont situées en retrait des extrémités axiales par rapport aux feuilles espaceuses de canal de perméat.

4. Dispositif de séparation à membrane selon la revendication 3, dans lequel un film imperméable hydrauliquement (18) recouvre ou feuillette au moins un bord des feuilles d'espacement de canaux à peméat, dans sa partie en retrait.

5. Dispositif de séparation à membrane selon la revendication 1, dans lequel lesdites membranes lamellaires sont scellées à tous les bords du côté perméat, excepté à au moins un bord latéral, afin de définir un canal de perméat pour la décharge du perméat de l'élément et ledit canal de perméat étant connecté à un moyen de conduite (11) pour recueillir ledit perméat.

6. Dispositif de séparation à membrane selon l'une quelconque des revendications précédentes, dans lequel au moins un bord latéral du dispositif à membrane cylindrique est encapsulé dans un adhésif de basse viscosité (7a et/ou 7b) sur une distance d'au moins 2,54 cm (1 pouce) à partir de l'extrémité axiale.

7. Dispositif de séparation à membrane selon la revendication 6, dans lequel au moins un bord latéral du dispositif est encapsulé avec un adhésif dans un godet plastique terminal (9a et/ou 9b).

8. Dispositif de séparation à membrane selon l'une quelconque des revendications précédentes, dans lequel les ou chaque membranes lamellaires et tous les espaceurs à l'exception de l'espaceur de canal à perméat, par exemple un tissu porteur de perméat, sont situées en retrait d'au moins 2,54 cm (1 pouce) de l'extrémité du dispositif à la ou à chaque extrémité de perméat non scellées.

9. Dispositif de séparation à membrane selon l'une quelconque des revendications précédentes, dans lequel les ou chaque canaux spiralés d'écoulement d'alimentation concentré et les ou chaque canaux axiaux d'écoulement de perméat sont scellés avec un adhésif.

10. Dispositif de séparation à membrane selon l'une quelconque des revendications précédentes, dans lequel la membrane est une membrane à osmose inverse, une membrane à ultrafiltration, ou une membrane à microfiltration.

11. Dispositif de séparation à membrane selon l'une quelconque des revendications précédentes, dans lequel, pour chaque feuille d'espacement d'alimentation (17), il y a une feuille d'espacement de canal de perméat (14) et deux feuilles de membrane (15) arrangées de tel façon que dans le corps de la spirale, chaque feuille d'espacement de canal à perméat ait une feuille de membrane sur ses faces.

12. Procédé pour (i) filtrer un mélange fluide contenant des sels dissous, (ii) dessaler un mélange d'eau saumâtre ou d'eau de mer, (iii) séparer l'eau et n'importe quels sels dissous contenus dedans de plus grosses molécules dissoutes ou en suspension dans un mélange fluide, ou (iv) séparer de grosses molécules dissoutes ou des matériaux particulaires d'un mélange fluide contenant la même chose, lequel comprend le filtrage dudit mélange fluide à travers un dispositif de séparation à membrane tel que revendiqué dans l'une quelconque des revendications 1 à 11, dans lequel les membranes lamellaires consistent en des membranes à osmose inverse dans les cas (i) et (ii), de membranes à ultrafiltration dans le cas (iii), et de membrane à microfiltration dans le cas (iv).
